# FASCICULE DE BREVET EUROPEEN

(11) **EP 1 366 250 B1**
(45) Date de publication et mention de la délivrance du brevet: **20.10.2004**
(21) Numéro de dépôt: 01909904.3
(22) Date de dépôt: 27.02.2001
(51) Int. Cl.: E04F 15/16, E04F 15/02, C09J 175/04, C09K 3/10, C08G 18/48

(54) **PROCEDE POUR LA REALISATION D'UN REVETEMENT DE SOL**
VERFAHREN ZUR HERSTELLUNG EINES BODENBELAGES
METHOD FOR PRODUCING A FLOOR COVERING

(43) Date de publication de la demande: 03.12.2003
(73) Titulaire: GERFLOR, 69100 Villeurbanne (FR)
(72) Inventeur: RIVAT, Alain, F-69550 Amplepluis (FR); HINAULT, Robert, F-69380 Marcilly d'Azergues (FR)
(74) Mandataire: Dupuis, François
(86) Numéro de dépôt international: PCT/FR2001/000559
(87) Numéro de publication internationale: WO 2002/068772

(56) Documents cités:
- DE-C- 949 261
- DE-U- 29 710 453
- FR-A- 2 428 119
- FR-A- 2 681 884
- FR-A- 2 804 456
- US-A- 3 827 204
- US-A- 5 564 598
- PATENT ABSTRACTS OF JAPAN vol. 1996, no. 08, 30 août 1996 (1996-08-30) & JP 08 104861 A (SEKISUI CHEM CO LTD), 23 avril 1996 (1996-04-23)
- PATENT ABSTRACTS OF JAPAN vol. 1996, no. 02, 29 février 1996 (1996-02-29) & JP 07 268309 A (DAINIPPON INK & CHEM INC), 17 octobre 1995 (1995-10-17)

## Description

### Domaine Technique

La présente invention a trait à un perfectionné apporté aux procédés permettant la réalisation de revêtements de sol à partir de matériaux flexibles en feuille.

Elle a trait plus précisément à un procédé perfectionné permettant de réaliser la jonction des panneaux élémentaires entre eux.

### Techniques antérieures

Il a été proposé depuis fort longtemps de réaliser des revêtements de sol à partir de feuilles souples, en matière plastique, PVC plastifié notamment, éventuellement renforcé par une structure textile noyée dans la masse de la matière.

Par ailleurs, pour améliorer le confort, la feuille thermoplastique de surface est très souvent associée à une sous-couche en mousse. De plus, la face apparente est recouverte d'une couche de finition conférant à l'ensemble des propriétés spécifiques telles que résistance aux UV, tenue à l'encrassement, à la rayure, au trafic, à l'abrasion, anti-dérapement.

L'un des problèmes qui se pose avec de tels revêtements, qui sont collés sur le support, est celui de la réalisation de la jonction entre deux bandes ou panneaux consécutifs ainsi que l'étanchéité en rives par remontées en plinthe.

A ce jour, deux grandes techniques sont utilisées pour réaliser la jonction des lés élémentaires, à savoir la soudure à chaud et la soudure à froid.

La technique dite « soudure à chaud » consiste à réaliser la thermofusion des bords des lés à l'aide d'un cordon d'apport en PVC et d'un chalumeau à air chaud.

Pour ce faire, on réalise des chanfreins sur les bords des lés et on réalise un apport de matière (PVC) dont on provoque la fusion au moyen d'un chalumeau à air chaud.

Une telle manière de procéder permet d'obtenir une très bonne résistance à la rupture supérieure à 8 daN/cm ainsi que de souder des angles avec profil arrondi et des parties verticales.

La compétence du soudeur est cependant primordiale pour obtenir une bonne régularité du joint et surtout elle entraîne une détérioration des propriétés de la couche de surface avec, notamment dans le cas où cette dernière est constituée par un vernis, un défaut de « crispation » pouvant s'étendre sur plus de un centimètre de largeur.

Par ailleurs, lors de la réalisation du joint, après arasement pour éliminer le surplus de matière, il se produit très souvent un léger retrait formant un creux au niveau de la soudure posant des problèmes d'encrassement à l'usage.

La technique dite par « soudure à froid » est utilisée pour réaliser la jonction des lés des matériaux en mousse, et ce à l'aide d'une solution de résine de PVC dans un solvant (tétrahydrofurane par exemple) qui, après évaporation dudit solvant, soude la partie en mousse et colle les surfaces en regard l'une de l'autre.

On recouvre la zone de contact de deux lés consécutifs au moyen d'un adhésif de protection que l'on entaille au « cutter » le long de la ligne de jonction.

Cela étant fait, on réalise une injection de soudure à froid par le fond du matériau au moyen d'une buse fine que l'on introduit entre les deux lés.

L'excès de soudure se dépose donc sur l'adhésif de protection, ce qui permet de l'enlever sans détériorer les caractéristiques de surface du revêtement.

Cependant, la jonction entre deux lés consécutifs est moins résistante que dans le cas d'une soudure à chaud, la résistance à la rupture n'excédant pas 4daN/cm.

De plus, on ne peut pas faire de soudure dans les angles ou en remontée de plinthe compte tenu de la faible viscosité de la solution qui implique également l'utilisation d'un solvant.

Une telle technique implique donc quatre opérations successives après le collage du revêtement sur le sol et il est difficile de vérifier la régularité de la soudure après réalisation.

En outre, on connaît par le brevet DE 949261, un procédé de pose d'un revêtement de sol du type constitué par un complexe souple, comportant une couche d'usure en matériau thermoplastique, à base de PVC plastifié, les lés constituant ledit revêtement étant collés sur le sol et soudés à froid entre eux sur le site à équiper.

Dans ce procédé, après mise en place des lés, du mastic est introduit dans la zone de contact entre deux lés. Dans une variante, le lé consécutif est placé sur le sol couvert de colle et plaqué contre le lé précédent, de sorte que la colle remonte dans la zone de contact.

### Exposé de l'invention

Or, on a trouvé, et c'est ce qui fait l'objet de la présente invention, un procédé simple à mettre en oeuvre, qui permet de réaliser la soudure entre deux lés consécutifs d'un revêtement de sol ainsi que le traitement des angles et les remontées en plinthes, soudure qui présente une résistance supérieure à 5 daN/cm, est continue et constante en valeur.

Par ailleurs, la réalisation d'une telle soudure est d'une très grande simplicité et n'entraîne aucune détérioration des caractéristiques et des propriétés de la couche de surface.

D'une manière générale, l'invention concerne donc un procédé de pose d'un revêtement de sol du type constitué par un complexe souple comportant une couche d'usure en matériau thermoplastique, PVC plastifié notamment, les lés constituant ledit revêtement étant collés sur le sol et soudés à froid entre eux sur le site à équiper, caractérisé en ce que, après mise en place et collage d'un lé sur la surface à recouvrir :
_ on applique latéralement, sur toute l'épaisseur du revêtement, un cordon continu de mastic réalisé par un mélange sur le site même d'un durcisseur et d'une résine polyuréthanne en phase aqueuse présentant en particulier une viscosité comprise entre 10 000 et 12 000 centipoises (cps) ;
_ on met en place le lé consécutif sur le sol recouvert de colle et l'on fait plaquer son bord latéral contre le bord du lé précédent comportant le cordon de mastic, entraînant le refoulement en surface de l'excédent de matière ;
_ on élimine l'excès de mastic ainsi refoulé par simple essuyage à l'eau.

Un tel procédé peut être mis en oeuvre pour tout type de revêtement de sol à base de PVC plastifié pouvant comporter ou non un vernis de surface et être éventuellement renforcé par une structure textile et/ou posséder une sous-couche à base de mousse.

Pour la mise en oeuvre du procédé conforme à l'invention, et plus particulièrement l'application du cordon de mastic, on utilise un pistolet à mastic apte à contenir une cartouche contenant ledit durcisseur et la résine polyuréthanne équipée d'un embout permettant d'appliquer le mélange de ces deux éléments lors de la pose.

Dans un mode de réalisation préféré, comme composants entrant dans la constitution du mastic permettant d'assurer la liaison des deux lés, on utilisera :
- une partie de durcisseur à base d'isocyanates aliphatiques ;
- neuf parties de résine à base de résine polyuréthanne aliphatique.

Préférentiellement, le dépôt du cordon de mastic est réalisé à raison de 12 + g/m de longueur de lés à assembler et la viscosité du cordon de mastic est comprise entre 10 000 et 12 000 centipoises (cps) à 1000 tours/minute, ce qui permet de le déposer de manière régulière, non seulement horizontalement mais également pour réaliser une soudure en vertical, par exemple pour réaliser une remontée de plinthe.

En procédant d'une telle manière, on obtient une liaison parfaite, étanche entre deux lés consécutifs, sans aucune détérioration de l'aspect et des propriétés de surface du revêtement.

### Description sommaire des dessins

L'invention et les avantages qu'elle apporte seront cependant mieux compris grâce à la description qui suit et qui est illustrée par les schémas annexés dans lesquels :
- la figure 1 est une vue schématique en perspective montrant la pose du premier lé d'un revêtement de sol réalisé conformément à l'invention ;
- les figures 2 et 3 sont des vues schématiques représentant la cartouche contenant les composants entrant dans la constitution du mastic (figure 2) et la manière dont est réalisé le mélange (figure 3) ;

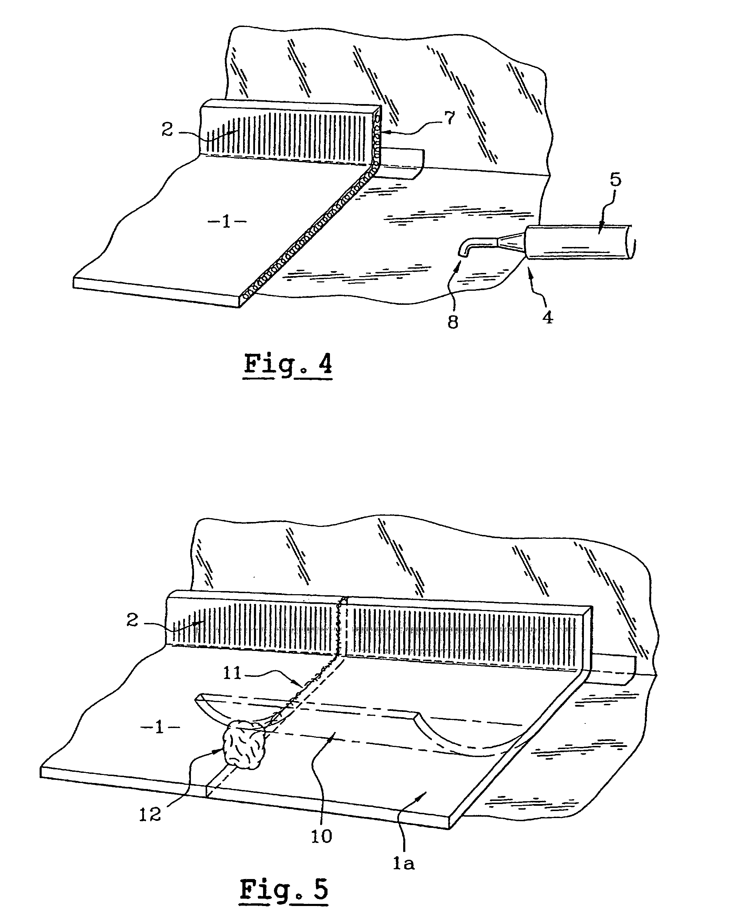

- la figure 4 illustre le dépôt du cordon de liaison le long du bord du lé ainsi posé et ;
- la figure 5 illustre la mise en place du lé consécutif et l'enlèvement de l'excès de matière.

### Manière de réaliser l'invention

L'invention mise en oeuvre pour la mise en place d'un revêtement de sol, comprenant une couche d'usure ayant une épaisseur de 0,7mm, en PVC plastifié renforcée par une nappe non tissée associée à une grille de verre, et une couche de surface à base de polyuréthanne réticulé constituée par un film communiquant au matériau ses propriétés de résistance aux ultra-violets, à l'abrasion, à l'usure.

Ce complexe est associé à une sous-couche en mousse. L'épaisseur totale est de 3,2 mm.

Pour la mise en place d'un tel revêtement, dans une première phase, on colle sur le sol (S) un premier lé (1) au moyen d'une colle acrylique en émulsion, déposée à la spatule.

La remontée en plinthe (2) est également réalisée par collage en prévoyant une cornière (3) dans l'angle.

Ce premier lé (1) étant posé, on dépose, au moyen d'un pistolet (4) renfermant une cartouche (5), un cordon de colle (7) sur toute la longueur du lé posé.

La cartouche (5) renferme le durcisseur (6a), à savoir de l'isocyanate aliphatique et la résine (6b), à savoir du polyuréthanne aliphatique.

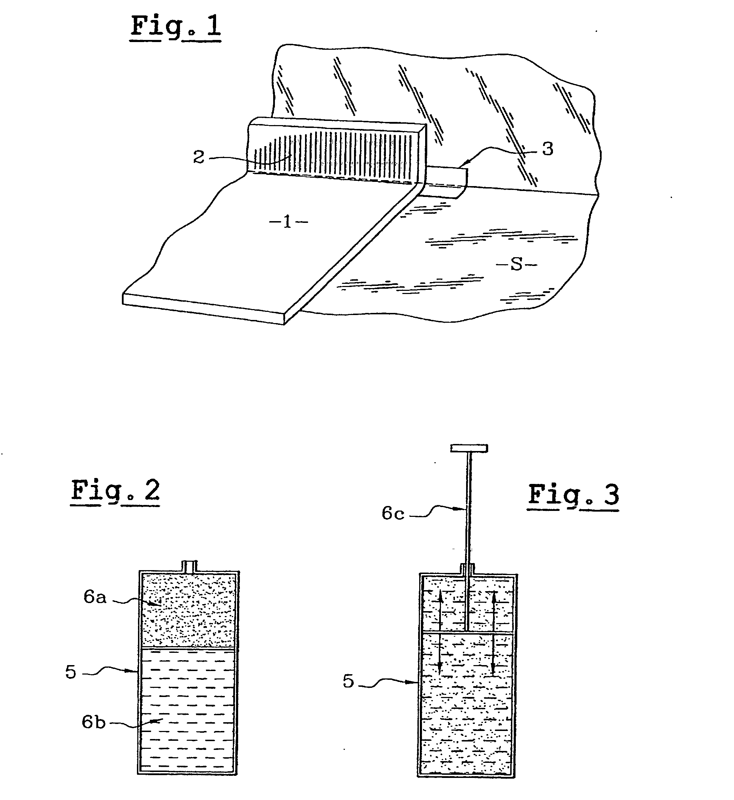

Le dosage est réalisé automatiquement et les deux composants (6a,6b) ont mélangés dans la cartouche (5), par exemple par agitation manuelle au moyen d'une tige mélangeuse (6c) (voir figure 3).

Le dépôt du cordon de colle est déposé à raison de 12 ± 2 g/mètre linéaire.

Pour la mise en place du second lé (1a) consécutif, on dépose également sur le sol et la remontée de la colle acrylique en émulsion à raison de 250 ± 50 g/m².

Lors de la pose, on prend soin de replier le lé par moitié (10) comme représenté en pointillés à la figure 3.

Le positionnement est réalisé de telle sorte que lorsque cette partie repliée (10) est rabattue, elle vient s'appliquer contre la face du bord revêtu du cordon (7).

Les deux lés (1) et (1a) étant ainsi mis bord à bord, l'excès de soudure remonte en surface (11) et peut, compte tenu de sa composition, être facilement éliminé par simple essuyage au moyen d'une éponge (12).

En procédant d'une telle manière, on obtient une liaison parfaite entre les deux lés, la soudure présentant une résistance comprise entre 6,5 et 8,5 daN/cm pour un revêtement de sol ayant une sous-couche mousse comme indiqué précédemment.

Pour un matériau standard ne comportant pas de sous-couche en mousse, la résistance est comprise entre 6 et 6,5 daN/cm.

Par ailleurs, le fait de déposer un cordon de colle permet de vérifier la continuité de la soudure, ce qui n'est pas le cas lorsque cette opération est réalisée par injection en aveugle d'une solution.

La formule utilisée permet de plus une application aisée en vertical.

L'opération de soudure peut être réalisée par un personnel moyennement qualifié et l'utilisation d'un pistolet avec cartouche comportant une buse d'application orientable est très simple d'utilisation et ne demande qu'une opération de mélangeage de la part du poseur.

Par ailleurs, le mastic étant à base aqueuse, il élimine tous les problèmes de toxicité de fumée de la soudure à chaud et de la présence de solvants dans le cas de la soudure à froid.

Enfin et surtout, un tel procédé élimine toute dégradation de la surface du revêtement et conduit à des soudures résistant dans le temps et qui ne s'encrassent pas au niveau du joint à usage.

## Revendications

1. Procédé de pose d'un revêtement de sol du type constitué par un complexe souple (1), comportant une couche d'usure en matériau thermoplastique, à base de PVC plastifié notamment, les lés (1,1a) constituant ledit revêtement étant collés sur le sol et soudés à froid entre eux sur le site à équiper, ***caractérisé* en ce que**, après mise en place et collage d'un lé (1) sur la surface à recouvrir :
- on applique latéralement, sur toute l'épaisseur du revêtement, un cordon (7) continu de mastic réalisé par un mélange sur le site même d'un durcisseur et d'une résine polyuréthanne en phase aqueuse ;
- on met en place le lé (la) consécutif sur le sol recouvert de colle et l'on fait plaquer son bord latéral contre le bord du lé précédent comportant le cordon de mastic (7), entraînant le refoulement en surface de l'excédent de matière ;
- on élimine l'excès de mastic ainsi refoulé par simple essuyage à l'eau.

2. Procédé selon la revendication 1, ***caractérisé* en ce que** le mastic permettant d'assurer la liaison entre deux lés consécutifs est composé de :
- une partie de durcisseur à base d'isocyanate aliphatique ;
- neuf parties de résine à base de polyuréthanne aliphatique.

3. Procédé selon l'une des revendications 1 et 2, ***caractérisé* en ce que** la viscosité du mastic est comprise entre 10 000 et 12 000 centipoises (cps), le dépôt du cordon le long du bord à assembler étant réalisé à raison de 12 ± 2g par mètre de longueur.

## Patentansprüche

1. Verfahren zum Verlegen eines Bodenbelags, der aus einem weichefastischen Komplex (1) besteht, und eine Nutzschicht aus thermoplastischem Material, insbesondere aus Weich-PVC, besitzt, wobei die Bahnen (1, 1a), welche den Bodenbelag darstellen. vor Ort mit dem Boden verklebt und untereinander kalt verschweißt werden, **dadurch gekennzeichnet, dass** man nach Anbringen und Verkleben einer Bahn (1) auf der zu bedeckenden Oberfläche :
- lateral über die gesamte Schicht des Bodenbelags ein kontinuierliches Mastixband (7) aufträgt. das aus einer vor Ort durchgeführten Mischung eines Härtemittels mit einem Polyurethanharz in wässriger Phase hergestellt wird ;
- man legt die nachfolgende Bahn (1a) auf den mit Klebstoff bedeckten Boden und drückt ihren Seitenrand gegen den Rand der vorhergehenden Bahn, welche das Mastixband aufweist (7), so dass das überschüssige Material hervortritt ;
- man entfernt den überschüssigen Mastix durch einfaches Abwischen mit Wasser.

2. Verfahren nach Anspruch 1, **dadurch gekennzeichnet, dass** der Mastix, welcher die Verbindung zwischen zwei aufeinanderfolgenden Bahnen ermöglicht, aus folgendem besteht :
- einem Teil Härtemittel auf Basis aliphatischem Isocyanat und
- neun Teilen Harz auf Basis aliphatischem Polyurethan.

3. Verfahren nach einem der Ansprüche 1 und 2, **dadurch gekennzeichnet, dass** die Viskosität des Mastix zwischen 10 000 und 12 000 cps liegt, wobei das Band entlang des zu verbindenden Randes mit 12 ± 2 g pro m Länge aufgebracht wird.

## Claims

1. Process for positioning a floor covering of the type composed of a flexible complex (1), comprising a wear layer made of thermoplastic material based on plasticized PVC in particular, the widths (1, 1a) constituting the said covering being adhesively bonded to the floor and cold welded to one another on the site to be fitted out, ***characterized* in that**, after installing on and adhesively bonding a width (1) to the surface to be covered:
- a continuous strip (7) of mastic, produced by mixing on the actual site a curing agent and a polyurethane resin in the aqueous phase, is applied at the side over the entire thickness of the covering;
- the following width (1a) is installed on the floor covered with adhesive and its side edge is pressed firmly against the edge of the preceding width comprising the strip of mastic (7), resulting in the excess material being squeezed out at the surface;
- the excess mastic thus squeezed out is removed by simple wiping with water.

2. Process according to Claim 1, ***characterized* in that** the mastic which makes it possible to bond together two consecutive widths is composed of:
- one part of curing agent based on aliphatic isocyanate;
- nine parts of resin based on aliphatic polyurethane.

3. Process according to either of Claims 1 and 2, ***characterized* in that** the viscosity of the mastic is between 10 000 and 12 000 centipoises (cps), the deposition of the strip along the edge to be fitted together being carried out at the rate of 12 ± 2 g per metre of length.
